(19) Europäisches Patentamt / European Patent Office / Office européen des brevets

(11) **EP 4 517 271 A1**

(12) **EUROPEAN PATENT APPLICATION**
published in accordance with Art. 153(4) EPC

(43) Date of publication:
**05.03.2025 Bulletin 2025/10**

(21) Application number: **23796406.9**

(22) Date of filing: **25.04.2023**

(51) International Patent Classification (IPC):
*G01D 5/353* (2006.01)     *C09J 7/38* (2018.01)
*G02B 6/00* (2006.01)

(52) Cooperative Patent Classification (CPC):
**C09J 7/38; G01D 5/353; G02B 6/00**

(86) International application number:
**PCT/JP2023/016362**

(87) International publication number:
**WO 2023/210666 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022  JP 2022072653**

(71) Applicant: **NITTO DENKO CORPORATION**
**Ibaraki-shi**
**Osaka 567-8680 (JP)**

(72) Inventors:
• **SUZUKI Yuto**
  **Ibaraki-shi, Osaka 567-8680 (JP)**
• **TANAKA Akiko**
  **Ibaraki-shi, Osaka 567-8680 (JP)**

• **TAIRA Yohei**
  **Tokyo 107-8388 (JP)**
• **SOGABE Naoki**
  **Tokyo 107-8388 (JP)**
• **IMAI Michio**
  **Tokyo 107-8388 (JP)**
• **TAMANO Keigo**
  **Tokyo 107-8388 (JP)**
• **KOJIMA Shintaro**
  **Tokyo 107-8388 (JP)**
• **SOGAWA Takayuki**
  **Tokyo 107-8388 (JP)**

(74) Representative: **Müller-Boré & Partner**
**Patentanwälte PartG mbB**
**Friedenheimer Brücke 21**
**80639 München (DE)**

(54) **OPTICAL-FIBER-EMBEDDED SHEET, METHOD FOR PLACING OPTICAL FIBER, AND APPLICATION DEVICE**

(57)     The present invention relates to an optical-fiber-embedding sheet which is a sheet into which an optical fiber for use as a sensor has been incorporated, including a base material, an adhesive layer, and a bonding adhesive layer laminated in this order, at least a part of the optical fiber having been embedded in the bonding adhesive layer, and the adhesive layer having a width larger than that of the bonding adhesive layer.

*FIG. 1*

(a)

(b)

**Description**

TECHNICAL FIELD

The present invention relates to an optical-fiber-embedding sheet, which is a sheet into which an optical fiber has been incorporated, a method for placing an optical fiber, and an application device for use in applying the optical-fiber-embedding sheet in the method.

BACKGROUND ART

An optical fiber has such a property that a strain distribution or a temperature distribution over the entire length of the optical fiber can be determined by causing pulsed light from a laser to enter the optical fiber and analyzing the resultant scattered light, etc.

Optical-fiber sensors for detecting a deformation of a structure or measuring the temperature thereof, by utilizing that property, have now been put into practical use. For example, Patent Document 1 describes an example in which a sensor including an optical fiber fixed between sheets is applied with an adhesive to a surface of a concrete structure in order to detect a deformation (damage) of the concrete structure by determining a strain of the optical fiber. Patent Document 2 describes an example in which an optical-fiber sensor including an optical fiber fixed to a member for placement is bonded to a structure with a bonding material provided to the member for placement and a deformation of the structure is detected from a strain of the optical fiber.

In Patent Document 1, an optical fiber is fixed between sheets, and in Patent Document 2, an optical fiber is fixed to a sheet-shaped member for placement. These prior-art techniques are intended to lessen the labor required for the placement operation, by applying the sheets or the member for placement to the placement object. However, production of these sensors is costly and there also is a possibility that since a sheet or the member for placement lies between the placement object and the optical fiber, a deformation or any change of the placement object is less apt to be reflected in the results of an examination with the sensor.

Therefore, Patent Document 3 discloses an optical-fiber-embedding sheet which is a sheet into which an optical fiber for use as a sensor has been incorporated. Since the optical fiber has been embedded in an adhesive layer and any sheet or the like does not lie between the optical fiber and a placement object, a deformation or any change of the placement object is apt to be reflected in the results of an examination with the optical fiber, and the layer configuration is simple and is less costly.

CITATION LIST

PATENT LITERATURE

[Patent Document 1] JP-A-2002-131025
[Patent Document 2] JP-A-2002-48516
[Patent Document 3] JP-A-2021-148713

SUMMARY OF INVENTION

TECHNICAL PROBLEMS

However, it has been found that there is still room for improvement in temporary fixation of the prior-art optical-fiber-embedding sheet to the placement object. In the optical-fiber-embedding sheet described in Patent Document 3, the adhesive layer has adhesiveness, so that the sheet can be temporarily fixed to the placement object, and then the adhesive layer is cured to fix the sheet to the placement object. However, for example, at the time of applying the sheet to a ceiling or the like, the temporary fixation is insufficient by the adhesiveness of the adhesive layer alone, and the sheet may be peeled off before the curing of the adhesive layer is completed.

Therefore, an object of the present invention is to provide an optical-fiber-embedding sheet or the like that has sufficient temporary fixation until application to a placement object is completed.

SOLUTION TO THE PROBLEMS

In order to solve the problem described above and achieve the object, the present invention has the following configurations.

[1] An optical-fiber-embedding sheet which is a sheet into which an optical fiber for use as a sensor has been incorporated, including

a base material, an adhesive layer, and a bonding adhesive layer laminated in this order,
at least a part of the optical fiber having been embedded in the bonding adhesive layer, and
the adhesive layer having a width larger than that of the bonding adhesive layer.

[2] The optical-fiber-embedding sheet according to the above [1], in which when a width (cm) of the adhesive layer is X, and a width (cm) of the bonding adhesive layer is Y, $0.05 \leq Y/X \leq 0.95$ is satisfied.

[3] The optical-fiber-embedding sheet according to above [1] or [2], including a wire for sheet tearing provided to the bonding adhesive layer.

[4] A method for placing an optical fiber, including adhering the optical-fiber-embedding sheet according to any one of the above [1] to [3] to a placement object by using the adhesive layer and the bonding adhesive layer, and then bonding the optical-fiber-embedding sheet to a placement object by using the bonding adhesive layer which is cured.

[5] The method for placing an optical fiber according to the above [4], in which a primer for curing the bonding adhesive layer by a chemical reaction with the bonding adhesive layer is applied to the placement object and thereafter the optical-fiber-embedding sheet is applied to a portion of the placement object to which the primer has been applied.

[6] The method for placing an optical fiber according to the above [4], in which a primer for curing the bonding adhesive layer by a chemical reaction with the bonding adhesive layer is applied to the bonding adhesive layer and thereafter the optical-fiber-embedding sheet is applied by bringing the bonding adhesive layer into contact with the placement object.

[7] The method for placing an optical fiber according to any one of the above [4] to [6], including using an application device which includes a reel having the optical-fiber-embedding sheet wound thereon and a press roller and applying the optical-fiber-embedding sheet by unwinding the optical-fiber-embedding sheet from the reel and moving the application device in a direction along which the optical-fiber-embedding sheet is applied, while pressing the unwound optical-fiber-embedding sheet against the placement object with the press roller.

[8] An application device for applying the optical-fiber-embedding sheet according to any one of the above [1] to [3] to a placement object, including

a reel having the optical-fiber-embedding sheet wound thereon and
a press roller for pressing the optical-fiber-embedding sheet unwound from the reel against the placement object.

ADVANTAGEOUS EFFECTS OF INVENTION

The optical-fiber-embedding sheet of the present invention includes the bonding adhesive layer, and the adhesive layer having a width larger than that of the bonding adhesive layer, and thus has sufficient temporary fixation to the placement object. Therefore, peeling of the sheet can be prevented until the curing of the bonding adhesive layer is completed. In addition, the labor required for a placement operation of the optical fiber can be lessened, and sensing can be conducted favorably at low cost.

BRIEF DESCRIPTION OF DRAWINGS

[Fig. 1] In Fig. 1, (a) and (b) are views illustrating a first optical-fiber-embedding sheet according to an embodiment of the present invention.

[Fig. 2] In Fig. 2, (a) and (b) are views illustrating a second optical-fiber-embedding sheet according to another embodiment of the present invention.

[Fig. 3] In Fig. 3, (a) and (b) are views illustrating a third optical-fiber-embedding sheet according to another embodiment of the present invention.

[Fig. 4] In Fig. 4, (a) and (b) are views illustrating a method for applying a primer 9 to a placement object 3 of an optical fiber.

[Fig. 5] In Fig. 5, (a) to (c) are views illustrating a method for placing an optical fiber 14.

[Fig. 6] Fig. 6 is a view illustrating an application device 5a.

[Fig. 7] In Fig. 7, (a) and (b) are cross-sectional views each illustrating a crack portion 3a and its vicinity of the placement object 3.

[Fig. 8] Fig. 8 is a view illustrating an optical-fiber-embedding sheet 1a.

[Fig. 9] In Fig. 9, (a) and (b) are views illustrating an optical-fiber-embedding sheet 1c.

[Fig. 10] In Fig. 10, (a) and (b) are views respectively illustrating optical-fiber-embedding sheets 1d and 1e.

[Fig. 11] Fig. 11 is a diagram showing results of an examination of an adhesive force in Examples.

[Fig. 12] Fig. 12 is a diagram showing results of an examination of a tape feeding force in Examples.

DESCRIPTION OF EMBODIMENTS

In the present description, "A to B" indicating a range means "A or more and B or less". In the present description, the term "weight" has the same meaning as the term "mass", and the term "weight%" has the same meaning as the term "mass%".

In the present description, the term "adhesive" refers to an adhesive that exhibits peeling resistance without being solidified. Specifically, the adhesive is also referred to as a pressure-sensitive adhesive, and refers to a material that exhibits a state of a soft solid (elastic body) in a temperature range around room temperature and has a property of easily adhering to an adherend under pressure. As defined in "C.A.Dahlquist, 'Adhesion: Fundamentals and Practice', McLaren & Sons, (1966) P.143", the adhesive referred to herein may generally be a material having a property of satisfying complex tensile elastic modulus $E^*$ (1 Hz) < $10^7$ dyne/cm$^2$ (typically, a material having the above property at 25°C). In addition, the term "adhesive layer" refers to a layer formed of the adhesive. Further, the term "adhesiveness" refers to the above property of the adhesive.

In the present description, the term "bonding adhesive" refers to a material that has a function of the above adhesive and increases peeling resistance when cured. In addition, the term "bonding adhesive layer" refers to a layer formed of the bonding adhesive.

Hereinafter, embodiments of the present invention will be described in detail. The present invention is not limited to the embodiments to be described below. In the following drawings, the same reference numerals may be given to members and portions having the same functions, and redundant description may be omitted or simplified. In addition, the embodiments described in the drawings are schematically illustrated to clearly describe the present invention, and sizes and scales of actual products are not necessarily accurately expressed.

(1. Optical-Fiber-Embedding Sheet)

An optical-fiber-embedding sheet according to an embodiment of the present invention is an optical-fiber-embedding sheet which is a sheet into which an optical fiber for use as a sensor has been incorporated, characterized by including a base material, an adhesive layer, and a bonding adhesive layer laminated in this order, at least a part of the optical fiber having been embedded in the bonding adhesive layer, and the adhesive layer having a width larger than that of the bonding adhesive layer.

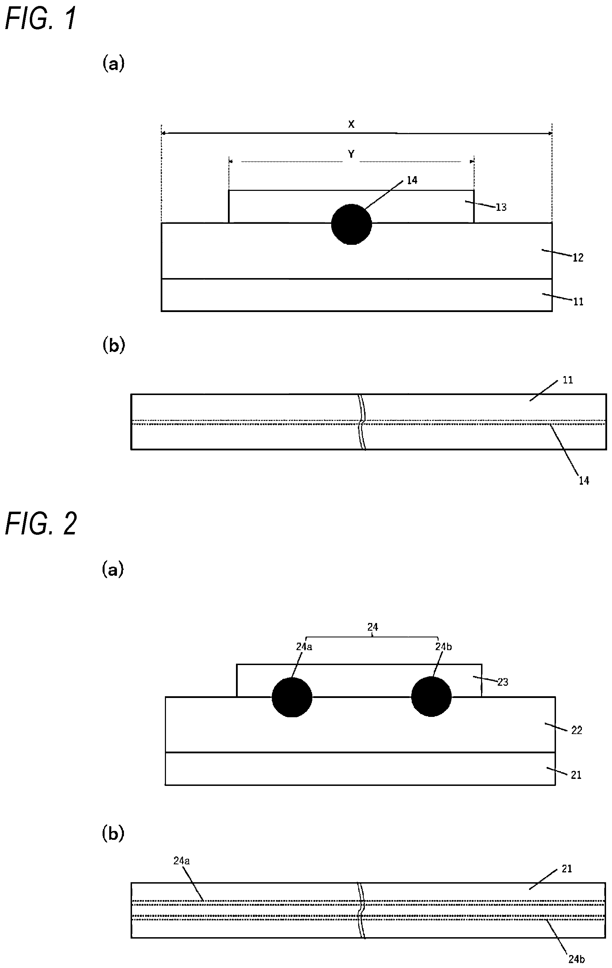

The optical-fiber-embedding sheet according to the embodiment of the present invention is adhered to an optical fiber placement object by bringing the bonding adhesive layer into contact with the optical fiber placement object, and then the bonding adhesive layer is gradually cured, so that the sheet is fixed to the optical fiber placement object. Here, as shown in (a) of Fig. 1, an adhesive layer 12 of the sheet has a width larger than that of a bonding adhesive layer 13, so that when the sheet is applied to a placement object via the bonding adhesive layer 13, the adhesive layer 12 is adhered to a placement object of an optical fiber 14, following a step formed by a placement object surface and the bonding adhesive layer 13. In this way, the adhesive layer 12 of the sheet is also adhered to the placement object of the optical fiber 14 in addition to the bonding adhesive layer 13, and thus sufficient temporary fixation can be obtained, and the sheet can be prevented from being peeled off until the curing of the bonding adhesive layer 13 is completed.

Here, "temporary fixing" means that the optical-fiber-embedding sheet is temporarily fixed to the placement object of the optical fiber 14 based on the adhesiveness of the adhesive layer 12 and the bonding adhesive layer 13 until the curing of the bonding adhesive layer 13 is completed.

In addition, the optical-fiber-embedding sheet according to the embodiment of the present invention is adhered to the placement object of the optical fiber by the bonding adhesive layer and the adhesive layer, and then bonded to the placement object of the optical fiber by the bonding adhesive layer, and thus the sufficient temporary fixation can be obtained, so that the labor required for a placement operation of the optical fiber can be lessened.

Furthermore, the base material, the adhesive layer, and the bonding adhesive layer of the optical-fiber-embedding sheet can function as protective layers for the optical fiber to reduce a risk that the optical fiber is damaged by external contacts.

Furthermore, at least a part of the optical fiber has been embedded in the bonding adhesive layer, and a deformation or any change of the placement object is apt to be reflected in the results of an examination with the optical fiber via the cured bonding adhesive layer, and the layer configuration is simple and is less costly.

Preferred embodiments of the present invention are described in detail below on the basis of the drawings.

(1.1. First Optical-Fiber-Embedding Sheet)

Fig. 1 is views illustrating a first optical-fiber-embedding sheet according to an embodiment of the present invention. The first optical-fiber-embedding sheet is a strip-shaped sheet material into which the optical fiber 14 to be used as a sensor has been incorporated, and a deformation of a placement object for the optical fiber 14 is detected on the basis of a strain of the optical fiber 14.

In Fig. 1, (a) is a view of a cross-section of the first optical-fiber-embedding sheet which is orthogonal to a longitudinal direction of the first optical-fiber-embedding sheet, and in Fig. 1, (b) is a view of the first optical-fiber-embedding sheet viewed from above (a) of Fig. 1.

As shown in (a) of Fig. 1, the first optical-fiber-embedding sheet has a configuration composed of a base material 11, the adhesive layer 12, and the bonding adhesive layer 13 laminated thereon, and at least a part of the optical fiber 14 has been embedded in the bonding adhesive layer 13. Since at least a part of the optical fiber 14 has been embedded in the bonding adhesive layer 13 and any sheet or the like does not lie between the optical fiber and the placement object, a deformation or any change of the placement object is apt to be reflected in the results of an examination with the optical fiber.

(Base Material)

A material of the base material 11 is not particularly limited, and may be a resin film or the like, and may be appropriately selected depending on a mode of use of the optical-fiber-embedding sheet or the like.

Examples of resin materials constituting the resin film include resins, for example, polyester, polyolefin, polycycloolefin derived from a monomer having an aliphatic ring structure such as a norbornene structure, polyamide (PA) such as nylon 6, nylon 66, and partially aromatic polyamide, polyimide (PI), polyamide imide (PAI), polyether ether ketone (PEEK), polyether sulfone (PES), polyphenylene sulfide (PPS), polycarbonate (PC), polyurethane (PU), ethylene-vinyl acetate copolymer (EVA), polystyrene, polyvinyl chloride, polyvinylidene chloride, fluororesins such as polytetrafluoroethylene (PTFE), acrylic resins such as polymethyl methacrylate, cellulose polymers such as diacetyl cellulose and triacetyl cellulose, vinyl butyral polymers, arylate polymers, polyoxymethylene polymers, and epoxy polymers.

The resin film may be formed using a resin material containing one of these resins alone, or may be formed using a resin material containing two or more of these resins blended together. The resin film may be unstretched or stretched (for example, uniaxially or biaxially stretched).

In the case where the optical-fiber-embedding sheet is to be used in environments where the optical-fiber-embedding sheet is exposed to sunlight, such as outdoor environments, the use of a material having known ultraviolet resistance as the base material 11 can prevent the optical-fiber-embedding sheet from being deteriorated by sunlight. In the case where the optical-fiber-embedding sheet is to be used in environments where the optical-fiber-embedding sheet is in contact with concrete, as in use in concrete, the use of a material having known alkali resistance as the base material 11 can prevent the optical-fiber-embedding sheet from being deteriorated by an alkali component of the concrete.

A thickness of the base material 11 is not particularly limited, and may be selected depending on a mode of use of the optical-fiber-embedding sheet or the like. The thickness of the base material 11 may be, for example, 1000 $\mu$m or less, 500 $\mu$m or less, 100 $\mu$m or less, 70 $\mu$m or less, 50 $\mu$m or less, 25 $\mu$m or less, 10 $\mu$m or less, or 5 $\mu$m or less. When the thickness of the base material is reduced, flexibility of the optical-fiber-embedding sheet and conformity to a surface shape of the placement object tend to be improved.

In addition, from the viewpoint of handleability, processability, or the like, the thickness of the base material 11 may be, for example, 2 $\mu$m or more, 5 $\mu$m or more, 10 $\mu$m or more, 20 $\mu$m or more, 35 $\mu$m or more, or 55 $\mu$m or more.

(Adhesive Layer)

The adhesive layer 12 is a layer mainly for temporarily fixing the optical-fiber-embedding sheet to the placement object. The adhesive layer 12 may be provided on one side of the base material 11 across the entire width of the base material 11, or may be provided not across the entire width.

The adhesive layer 12 has a width larger than that of the bonding adhesive layer 13 to be described later. Since the adhesive layer 12 has a width larger than that of the bonding adhesive layer 13, when the sheet is applied to the placement object via the bonding adhesive layer 13, the adhesive layer 12 is adhered to the placement object of the optical fiber 14, following the step formed by the placement object surface and the bonding adhesive layer 13. The adhesive layer 12 is adhered to the placement object of the optical fiber 14 together with the bonding adhesive layer 13, and thus an adhesive force of the sheet can be increased, sufficient temporary fixation can be obtained, and peeling of the sheet can be prevented until the curing of the bonding adhesive layer 13 is completed.

The term "width" means a length of the sheet along a direction which, in a plane, is orthogonal to the longitudinal direction of the optical-fiber-embedding sheet, and the width corresponds to the length of the sheet along the right-hand/left-hand direction in (a) of Fig. 1.

As shown in (a) of Fig. 1, when the width (cm) of the adhesive layer 12 is X and the width (cm) of the bonding adhesive layer 13 to be described later is Y, Y/X is preferably 0.95 or less, more preferably 0.9 or less, and still more preferably 0.8 or less. When Y/X is in the above range, temporary fixation by the adhesive layer 12 is sufficiently obtained.

In addition, Y/X is preferably 0.05 or more, more preferably 0.1 or more, and still more preferably 0.3 or more. When Y/X is in the above range, an increase in a feeding force of the sheet can be prevented, workability can be improved, and excessive stress on the optical fiber can be prevented.

The width (cm) X of the adhesive layer 12 is preferably 1 cm or more and more preferably 1.5 cm or more, and preferably 5 cm or less and more preferably 3 cm or less. By setting the width X of the adhesive layer 12 to 1 cm or more, an application area is increased and the adhesive force is improved, which is advantageous in terms of the adhesiveness of the optical-fiber-embedding sheet. In addition, by setting the width X of the adhesive layer 12 to 5 cm or less, an increase in weight when the optical-fiber-embedding sheet is wound into a roll and deterioration of an application property in a manual operation can be avoided, which is advantageous in terms of handling properties.

A known adhesive can be used for the adhesive layer 12, and examples thereof include adhesives containing a base polymer such as an acrylic polymer, a rubber polymer, a vinyl alkyl ether polymer, a silicone polymer, a polyester polymer, a polyamide polymer, a urethane polymer, a fluorine polymer, and an epoxy polymer. Among these, adhesives containing acrylic polymers (acrylic adhesives) are preferred in terms of the adhesive force and weather resistance. The polymer may be used alone or in combination of two or more types thereof.

When the placement object of the optical fiber 14 is a concrete member, the use of a material having known alkali resistance as the adhesive layer 12 can prevent the optical-fiber-embedding sheet from being deteriorated by an alkali component of the concrete.

A thickness of the adhesive layer 12 is, for example, 200 $\mu$m or more, preferably 400 $\mu$m or more, more preferably 600 $\mu$m or more, and is, for example, 1400 $\mu$m or less, preferably 1200 $\mu$m or less, more preferably 1000 $\mu$m or less. By setting the thickness of the adhesive layer 12 to 200 $\mu$m or more, the optical fiber is embedded in the adhesive layer, and an external pressure and the like are reduced, which is advantageous in that the optical fiber can be adequately protected. In addition, by setting the thickness of the adhesive layer 12 to 1400 $\mu$m or less, the increase in weight when the optical-fiber-embedding sheet is wound into a roll and the deterioration of the application property in the manual operation can be avoided, which is advantageous in terms of handling properties.

(Bonding Adhesive Layer)

The bonding adhesive layer 13 is a layer mainly for adhering and fixing the optical-fiber-embedding sheet to the placement object. Known bonding adhesives can be used for the bonding adhesive layer 13, and among these, it is preferable to use, as the bonding adhesive layer 13, a material that is cured by a chemical reaction with a primer to be described later. For example, a base material of a two-liquid adhesive that contains an epoxy resin as a main component and can form a layer may be used. In addition to the epoxy resin, other components that may be contained include, for example, a silicone compound, a polyol compound such as polypropylene glycol, and a urethane resin. The bonding adhesive can be tenaciously bonded to the placement object by containing an epoxy resin as a main component. Here, the term "main component" means a component that is contained most in a composition or a layer by mass.

Examples of the epoxy resin include bisphenol epoxy resins such as a bisphenol A epoxy resin, a bisphenol F epoxy resin, a bisphenol S epoxy resin, and a hydrogenated bisphenol A epoxy resin, a naphthalene epoxy resin, a biphenyl epoxy resin, a dicyclo epoxy resin, an alicyclic epoxy resin, a triglycidyl isocyanurate epoxy resin, a hydantoin epoxy resin, a glycidyl ether epoxy resin, and a glycidylamino epoxy resin.

In addition, as the epoxy resin, a trifunctional or higher multifunctional epoxy resin can also be used. Examples of such a multifunctional epoxy resin include a phenol novolac type epoxy resin, an orthocresol novolac type epoxy resin, a triphenyl novolac type epoxy resin, a bisphenol A novolac type epoxy resin, and an aliphatic epoxy resin.

The epoxy resin is preferably a bisphenol epoxy resin, and more preferably a bisphenol A epoxy resin.

The epoxy resin can be used alone or in combination of two or more types thereof.

In the case of using a multifunctional epoxy resin, the multifunctional epoxy resin is preferably 1 mass% to 50 mass%, and more preferably 3 mass% to 30 mass%, based on the entire epoxy resin.

The epoxy resin may be in any of liquid, semi-solid, and solid forms at room temperature, and preferred examples thereof include a semi-solid epoxy resin used alone, and a liquid epoxy resin and a solid epoxy resin used in combination. Accordingly, a tacky layered bonding adhesive layer can be reliably formed from a bonding adhesive composition.

Specifically, a liquid epoxy resin at room temperature is a liquid at 25°C. A viscosity of the liquid epoxy resin at 25°C is, for example, 30 Pa·s or more, preferably 80 Pa·s or more, and is, for example, 500 Pa·s or less, preferably 300 Pa·s or less.

Specifically, a solid epoxy resin at room temperature is a solid at 25°C. A softening point of the solid epoxy resin is, for example, 70°C or higher, and preferably 75°C or higher.

In the case of using the liquid epoxy resin and the solid epoxy resin in combination, a blending ratio of the liquid epoxy resin to the solid epoxy resin (liquid epoxy resin/solid epoxy resin) is, for example, 1.0 or more, preferably 1.5 or more, and is, for example, 4.0 or less, preferably 3.0 or less.

When the blending ratio of the liquid epoxy resin to the solid epoxy resin is equal to or greater than the above lower limit, a viscosity of the bonding adhesive composition is reduced, unevenness of a coating film can be prevented, and a uniform bonding adhesive layer can be obtained. When the blending ratio of the liquid epoxy resin to the solid epoxy resin is equal to or smaller than the above upper limit, a tacky layered bonding adhesive layer can be obtained.

A content of the epoxy resin in the bonding adhesive layer is preferably 30 mass% to 99 mass%, and more preferably 50 mass% to 90 mass%.

When the placement object of the optical fiber 14 is a concrete member, the use of a material having known alkali resistance as the bonding adhesive layer 13 can prevent the optical-fiber-embedding sheet from being deteriorated by an alkali component of the concrete.

The width (cm) Y of the bonding adhesive layer 13 is preferably 0.2 cm or more and more preferably 0.5 cm or more, and preferably 3 cm or less and more preferably 2.5 cm or less. When the width (cm) Y of the bonding adhesive layer 13 is 0.2 cm or more, the optical-fiber-embedding sheet can be sufficiently adhered and fixed to the placement object, and when the width (cm) Y is 3 cm or less, deterioration of the handling properties due to an increase in a width of the entire optical-fiber-embedding sheet can be prevented, and an area required for primer application can be reduced.

A thickness of the bonding adhesive layer 13 is, for example, 3 $\mu$m or more, preferably 5 $\mu$m or more, more preferably 10 $\mu$m or more, and is, for example, 100 $\mu$m or less, preferably 90 $\mu$m or less, more preferably 75 $\mu$m or less. When the thickness of the bonding adhesive layer 13 is 3 $\mu$m or more, it is advantageous in that a peel strength before curing and impact resistance after curing are excellent. In addition, when the thickness of the bonding adhesive layer 13 is 100 $\mu$m or less, it is advantageous in that the primer described below easily penetrates the bonding adhesive layer 13, thereby improving a curing speed.

(Optical Fiber)

The optical fiber 14 is a linear member constituted by a glass, etc. A known fiber member for use as a sensor can be used as the optical fiber 14. The optical fiber 14 has been disposed so that a longitudinal direction thereof coincides with the longitudinal direction of the optical-fiber-embedding sheet, and at least a part of the optical fiber 14 has been embedded in the bonding adhesive layer. In addition, at least a part of the optical fiber 14 may be embedded in the adhesive layer.

(Release Liner)

In the optical-fiber-embedding sheet of this embodiment, the adhesive layer 12 and the bonding adhesive layer 13 may be protected by a release liner (separator, release film) until use.

As the release liner, a common release paper or the like can be used, and although not particularly limited, for example, a base material having a release-treated layer, a low adhesion base material formed of a fluorine polymer, and a low adhesion base material formed of a nonpolar polymer can be used.

Examples of the base material having a release-treated layer include a plastic film or paper subjected to surface treatment with a release treatment agent such as a silicone release treatment agent, a long-chain alkyl release treatment agent, a fluorine release treatment agent, and molybdenum sulfide.

Examples of the fluorine polymer of the low adhesion base material formed of a fluorine polymer include polytetrafluoroethylene, polychlorotrifluoroethylene, polyvinyl fluoride, polyvinylidene difluoride, a tetrafluoroethylene-hexafluoropropylene copolymer, and a chlorofluoroethylene-vinylidene fluoride copolymer.

Examples of the nonpolar polymer of the low adhesion base material formed of a nonpolar polymer include olefin resins (for example, polyethylene and polypropylene). The release liner can be formed by a known or common method. In addition, a thickness and the like of the release liner are also not particularly limited.

(1.2. Second Optical-Fiber-Embedding Sheet)

In Fig. 2, (a) and (b) are views illustrating a second optical-fiber-embedding sheet according to another embodiment of the present invention. The second optical-fiber-embedding sheet is a strip-shaped sheet material into which a plurality of optical fibers 24 (first optical fiber 24a, second optical fiber 24b) to be used as sensors have been incorporated. In (a) and (b) of Fig. 2, two optical fibers 24 have been incorporated into the sheet, but the number is not limited thereto, and may be three or more.

In addition, with regard to each configuration of the second optical-fiber-embedding sheet of this embodiment, the description relating to the embodiment of the first optical-fiber-embedding sheet described above applies as it is, unless otherwise specified.

In Fig. 2, (a) is a view of a cross-section of the second optical-fiber-embedding sheet which is orthogonal to a longitudinal direction of the second optical-fiber-embedding sheet, and in Fig. 2, (b) is a view of the second optical-fiber-embedding sheet viewed from above (a) of Fig. 2. As shown in (a) of Fig. 2, the second optical-fiber-embedding sheet has a configuration composed of a base material 21, an adhesive layer 22, and a bonding adhesive layer 23 laminated thereon, and at least a part of each of the plurality of optical fibers 24 (first optical fiber 24a, second optical fiber 24b) has been embedded in the bonding adhesive layer 23.

(1.3. Third Optical-Fiber-Embedding Sheet)

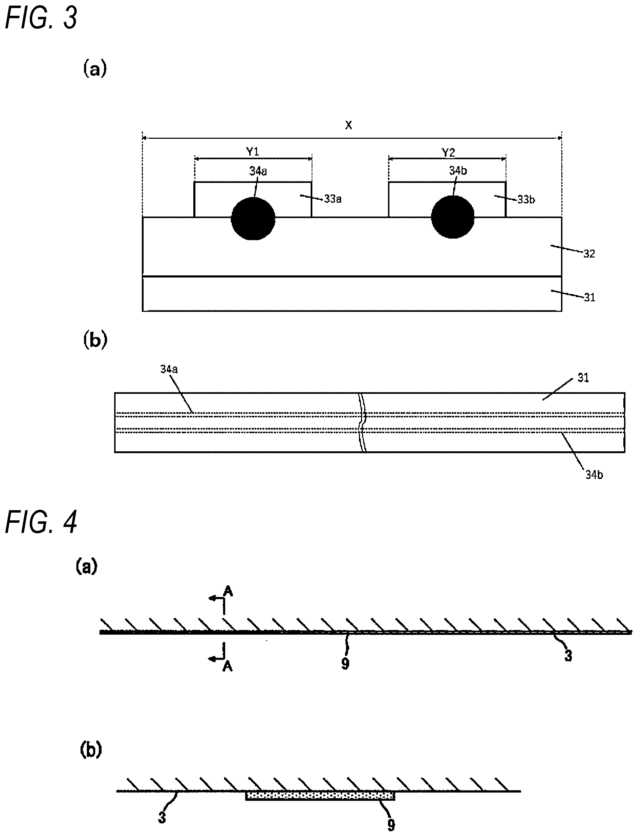

In Fig. 3, (a) and (b) are views illustrating a third optical-fiber-embedding sheet according to another embodiment of the present invention. The third optical-fiber-embedding sheet is a strip-shaped sheet material that includes a plurality of bonding adhesive layers 33 (first bonding adhesive layer 33a, second bonding adhesive layer 33b) on an adhesive layer 32, and in which a plurality of optical fibers 34 (optical fiber 34a, optical fiber 34b) to be used as sensors have been incorporated respectively in the bonding adhesive layers 33 in a partially embedded manner. In (a) and (b) of Fig. 3, at least a part of one optical fiber has been incorporated into each of the two bonding adhesive layers in an embedded manner, but the number of bonding adhesive layers and the number of optical fibers are not limited thereto, and each may be two or more, or three or more. In addition, a plurality of optical fibers may be incorporated into one bonding adhesive layer in a partially embedded manner.

In addition, with regard to each configuration of the third optical-fiber-embedding sheet of this embodiment, the description relating to the embodiment of the first optical-fiber-embedding sheet described above applies as it is, unless otherwise specified.

In Fig. 3, (a) is a view of a cross-section of the third optical-fiber-embedding sheet which is orthogonal to a longitudinal direction of the third optical-fiber-embedding sheet, and in Fig. 3, (b) is a view of the third optical-fiber-embedding sheet viewed from above (a) of Fig. 3. As shown in (a) of Fig. 3, the third optical-fiber-embedding sheet has a configuration composed of a base material 31, the adhesive layer 32, and the bonding adhesive layers 33 (first bonding adhesive layer 33a, second bonding adhesive layer 33b) laminated thereon, and at least a part of the optical fiber 34a has been embedded in the first bonding adhesive layer 33a, and at least a part of the optical fiber 34b has been embedded in the second bonding adhesive layer 33b.

In addition, in the third optical-fiber-embedding sheet, a width Y (cm) of the bonding adhesive layer 33 means the total of widths of a plurality of bonding adhesive layers, and for example, in (a) of Fig. 3, the width Y means the total (Y1 + Y2) of a width Y1 of the first bonding adhesive layer 33a and a width Y2 of the second bonding adhesive layer 33b.

(2. Method for Placing Optical Fiber)

Next, a method for placing the optical fiber 14 using an optical-fiber-embedding sheet 1 will be described. In this embodiment, the optical-fiber-embedding sheet 1 is adhered to the placement object of the optical fiber 14 by using the adhesive layer 12 and the bonding adhesive layer 13, and then bonded to the placement object by using the bonding adhesive layer 13, thereby placing the optical fiber 14. The placement object is, for example, a concrete member, a steel member, or the like which constitutes a column, beam, crossbeam, floor, wall, etc. of a structure. However, the placement object is not particularly limited.

As an embodiment of the method for placing the optical fiber 14, there is a mode in which a primer 9 for curing the bonding adhesive layer 13 by a chemical reaction with the bonding adhesive layer 13 is applied to a placement object 3, and thereafter the optical-fiber-embedding sheet 1 is applied to a portion of the placement object to which the primer 9 has been applied.

In this mode, in preparation for the placement of the optical fiber, the primer 9 is first applied to a surface of the placement object 3 on which the optical fiber is to be placed, as shown in (a) and (b) of Fig. 4. In this embodiment, the optical fiber 14 is placed on a lower surface of the placement object 3 and the primer 9 is applied to the lower surface. However, the surface on which the optical fiber is to be placed (surface to which the primer 9 is applied) is not particularly limited.

The primer 9 is applied to a strip-shaped area according to a portion where the optical-fiber-embedding sheet 1 is to be applied. In Fig. 4, (a) shows a cross-section of a portion to which the primer 9 has been applied, viewed along a longitudinal direction thereof, and in Fig. 4, (b) shows a cross-section along line A-A of (a) of Fig. 4.

As stated above, a material which cures the bonding adhesive layer 13 by a chemical reaction with the bonding adhesive layer 13 is used in this embodiment as the primer 9. For example, an epoxy resin curing agent is used as the primer 9. Although the curing agent is not particularly limited, examples thereof include imidazole compounds and amine compounds.

Examples of the imidazole compound include methylimidazole, 2-ethyl-4-methylimidazole, 1-isobutyl-2-methylimidazole (IBMI12), 1-benzyl-2-methylimidazole (1B2MZ), 1,2-dimethylimidazole (1,2DMZ), 1-butylimidazole (1BZ), 1-decyl-2-methylimidazole (1D2MZ), 1-octylimidazole (1OZ), 2-ethyl-4-methylimidazole, ethylimidazole, isopropylimidazole, 2,4-dimethylimidazole (2E4MZ), 1-phenylimidazole (1PZ), undecylimidazole, heptadecylimidazole, 2-phenyl-4-methylimidazole, 2-phenyl-4,5-dihydroxymethylimidazole, and 2-phenyl-4-methyl-5-hydroxymethylimidazole. From the viewpoint of the curing speed, a 1-position substituted imidazole compound is preferred.

Examples of the amine compound include ethylenediamine, propylenediamine, diethylenetriamine, triethylenetetramine, an amine adduct thereof, metaphenylenediamine, diaminodiphenylmethane, and diaminodiphenylsulfone.

The primer 9 is preferably a curing agent having catalytic activity with respect to the epoxy resin, and specific examples thereof include an imidazole compound.

The primer 9 can be used alone or in combination of two or more types thereof. When the curing agent is solid, the curing agent may be dissolved in a solvent as necessary to prepare a varnish for use.

The materials mentioned above are mere examples, and material combinations for the primer 9 and the bonding adhesive layer 13 are not particularly limited so long as the bonding adhesive layer 13 can be cured by a chemical reaction between the primer 9 and the bonding adhesive layer 13. The kind of the chemical reaction also is not particularly limited.

After the primer 9 has been thus applied, the optical-fiber-embedding sheet 1 is adhered to the placement object 3 by using the adhesive layer 12 and the bonding adhesive layer 13. Thereafter, the primer 9 penetrates the bonding adhesive layer 13, so that the bonding adhesive layer 13 is cured, and the optical-fiber-embedding sheet 1 is bonded to the placement object 3 by the bonding adhesive layer 13. The optical-fiber-embedding sheet 1 is applied to a portion of the placement object 3 to which the primer 9 has been applied, and at this time, the position of the optical fiber 14 is aligned with the portion to which the primer 9 has been applied.

As another embodiment of the method for placing the optical fiber, there is a mode in which the primer 9 for curing the bonding adhesive layer 13 by a chemical reaction with the bonding adhesive layer 13 is applied to the bonding adhesive layer 13, and thereafter the bonding adhesive layer 13 is brought into contact with the placement object 3 to apply the optical-fiber-embedding sheet 1.

In this mode, in preparation for the placement of the optical fiber 14, the primer 9 for curing the bonding adhesive layer 13 by a chemical reaction is first applied to a surface of the bonding adhesive layer 13. After the primer 9 has been applied, the optical-fiber-embedding sheet 1 is adhered to the placement object 3 by using the adhesive layer 12 and the bonding adhesive layer 13. The primer 9 penetrates the bonding adhesive layer 13, so that the bonding adhesive layer 13 is cured, and the optical-fiber-embedding sheet 1 is bonded to the placement object 3 by the bonding adhesive layer 13.

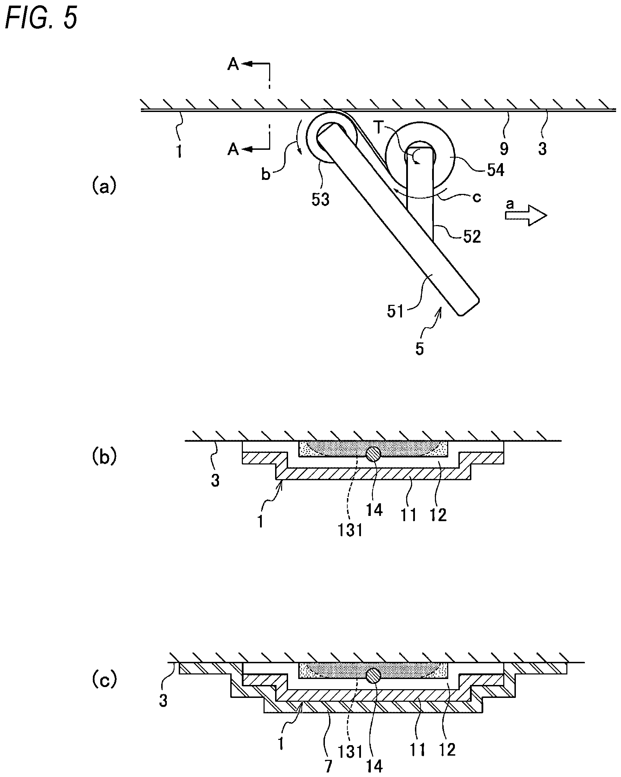

In this embodiment, an application device 5 illustrated in (a) of Fig. 5 may be used for applying the optical-fiber-embedding sheet 1.

The application device 5 includes a main body 51, a fixing material 52, a press roller 53, a reel 54, etc. The main body 51 is a rod-shaped member and has the press roller 53 provided to an end portion thereof. The reel 54 includes the optical-fiber-embedding sheet 1 wound into a roll, and has been attached to a longitudinal-direction center portion of the main body 51 by the fixing material 52.

A worker grips a base end of the main body 51, which is an end portion on a side opposite from the press roller 53, and moves the application device 5 in an application direction of the optical-fiber-embedding sheet 1 shown by arrow "a" in (a) of Fig. 5 (direction along which the optical-fiber-embedding sheet 1 is applied), while pressing the optical-fiber-embedding sheet 1 unwound from the reel 54 against the placement object 3 with the press roller 53.

At this time, the press roller 53 and the reel 54 rotate as indicated by arrows b and c, respectively, in a plane (plane shown in (a) of Fig. 5) orthogonal to the surface on which the optical fiber 14 is to be placed, and the adhesive layer 12 and the bonding adhesive layer 13 of the optical-fiber-embedding sheet 1 unwound from the reel 54 are sequentially adhered or bonded to the placement object 3 with the press roller 53. By setting a rotational resistance T of the reel 54 at an appropriate value, the application can be carried out while a certain initial tension derived from the rotational resistance T is being given to the optical fiber 14 of the optical-fiber-embedding sheet 1.

By applying the optical-fiber-embedding sheet 1 to the portion of the placement object 3 to which the primer 9 has been applied, the bonding adhesive layer 13 is cured through a chemical reaction with the primer 9 to form a cured portion 131 of the bonding adhesive layer 13 as shown in (b) of Fig. 5. The cured portion 131 is formed at least in a part of the periphery of the optical fiber 14. However, the range over which the cured portion 131 is formed varies depending on the application width and application amount of the primer 9, etc., and is not particularly limited.

By thus curing the bonding adhesive layer 13, the optical fiber 14 is tenaciously fixed to the placement object 3 and is more highly integrated with the placement object 3.

In the case where the optical-fiber-embedding sheet 1 applied to the placement object 3 lies in an environment where the sheet 1 is exposed to sunlight, such as an outdoor environment, or where the optical-fiber-embedding sheet 1 is to be caused to lie in an environment where the sheet 1 is in contact with concrete, for example, by placing concrete on the lower surface of the placement object 3, then the optical-fiber-embedding sheet 1 may be covered with a covering material 7 as shown in (c) of Fig. 5. In the former case, a material having ultraviolet resistance is used as the covering material 7. In the latter case, a material having alkali resistance is used as the covering material 7. The use of these materials is suitable for preventing the deterioration of the optical-fiber-embedding sheet 1.

In the manner described above, the optical fiber 14 is placed on the placement object 3. Thereafter, an end of the optical fiber 14 embedded in the bonding adhesive layer 13 is taken out and connected to a measuring instrument (not shown) and a deformation of the placement object 3 is detected from a strain of the optical fiber 14. Known as means for the examination are BOTDR (Brillouin optical time domain reflectometer), BOCDA (Brillouin optical correlation domain analysis), FBG (fiber Bragg grating), etc. Any of these means can be applied, and use may be made of an optical fiber 14 and a measuring instrument according to the means.

According to this embodiment described above, the optical-fiber-embedding sheet 1 is adhered to the placement object 3 by the adhesive layer 12 and the bonding adhesive layer 13, and then bonded to the placement object 3 by the bonding adhesive layer 13, so that an adhesive force of the optical-fiber-embedding sheet 1 can be increased, sufficient temporary fixation can be obtained, and peeling of the sheet can be prevented until the curing of the bonding adhesive layer 13 is completed.

In addition, the optical-fiber-embedding sheet 1 is adhered to the placement object 3 by the adhesive layer 12 and the bonding adhesive layer 13, and then bonded to the placement object 3 by the bonding adhesive layer 13, so that the labor required for a placement operation of the optical fiber 14 can be lessened, and the placement operation can be rationally carried out by a small number of persons.

Furthermore, the base material 11, the adhesive layer 12, and the bonding adhesive layer 13 of the optical-fiber-embedding sheet 1 function as protective layers for the optical fiber 14 and a risk that the optical fiber 14 is damaged by external contacts during or after the placement operation can be reduced.

Moreover, since at least a part of the optical fiber 14 has been embedded in the bonding adhesive layer 13 and any sheet or the like does not lie between the optical fiber 14 and the placement object 3, a deformation of the placement object 3 is apt to be reflected in the results of an examination with the optical fiber 14, making it possible to favorably perform sensing, and the layer configuration is simple and is less costly.

In addition, in this embodiment, by curing the bonding adhesive layer 13, which contains the optical fiber 14 embedded therein, by a reaction with the primer 9, the optical fiber 14 is more highly integrated with the placement object 3 and is prevented from readily separating therefrom, thereby obtaining improved durability.

Furthermore, in this embodiment, the use of the application device 5 in applying the optical-fiber-embedding sheet 1 not only further facilitates the operation of applying the optical-fiber-embedding sheet 1 to enable the application to be performed by only one person but also improves the application accuracy. In addition, since the application can be carried out while a certain initial tension is being given to the optical fiber 14 of the optical-fiber-embedding sheet 1, it is possible to introduce a certain initial strain into the optical fiber 14 throughout its entire length to prevent examination results from fluctuating.

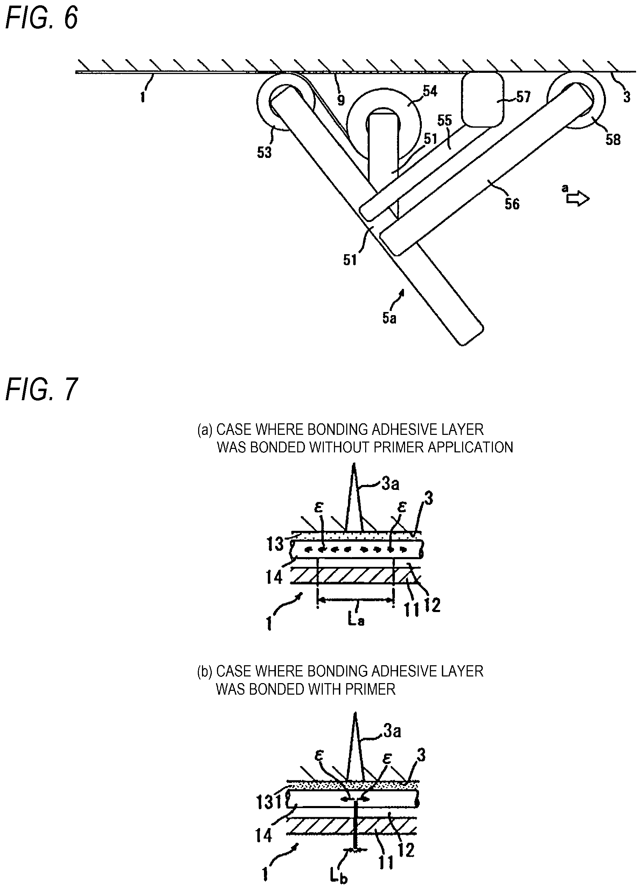

It is, however, possible to apply the optical-fiber-embedding sheet 1 without using the application device 5. Furthermore, an application device 5a illustrated in Fig. 6 can be used in place of the application device 5 described above.

The application device 5a shown in Fig. 6 has a configuration including the application device 5 and a primer applicator 57 added thereto, so that application of the primer 9 and application of the optical-fiber-embedding sheet 1 can be conducted by one operation. This application device 5a further lessens the labor required for the placement operation of the optical fiber. The application device 5a can be used in the mode, among the optical fiber placement modes described above, in which the primer 9 for curing the bonding adhesive layer by a chemical reaction with the bonding adhesive layer is applied to the placement object 3, and thereafter the optical-fiber-embedding sheet 1 is applied to a portion of the placement object 3 to which the primer 9 has been applied.

The primer applicator 57 has been attached to the end of a support material 55 extending from a center portion of the main body 51 of the application device 5a. In the example shown in Fig. 6, an auxiliary roller 58 for helping the application device 5a in running has been further attached to the center portion of the main body 51 by a fixing material 56. The press roller 53, the primer applicator 57, and the auxiliary roller 58 are disposed in this order along an application direction "a" of the optical-fiber-embedding sheet 1.

The worker grips the base end of the main body 51, pushes the press roller 53, the primer applicator 57, and the auxiliary roller 58 into contact with the placement object 3, and moves the application device 5a in the application direction "a" of the optical-fiber-embedding sheet 1 while pressing the optical-fiber-embedding sheet 1 unwound from the reel 54 against the placement object 3 with the press roller 53. Thus, the application of the primer 9 with the primer applicator 57 is conducted before the application of the optical-fiber-embedding sheet 1, and a series of these operations can be carried out by a single person. An expansion/contraction mechanism employing, for example, a spring may be provided to the support material 55. This causes the primer applicator 57 to follow the surface irregularities of the placement object 3, making it possible to always apply the primer 9 in a necessary amount.

In this embodiment, the bonding adhesive layer 13 of the optical-fiber-embedding sheet 1 is cured with the primer 9 applied to the placement object 3. However, the bonding adhesive layer 13 of the optical-fiber-embedding sheet 1 may be bonded to the placement object 3 without application of the primer 9. In this case, there is no need of curing the bonding adhesive layer 13 by a chemical reaction with the primer 9.

In the case where the bonding adhesive layer 13 of the optical-fiber-embedding sheet 1 is bonded to the placement object 3 without application of the primer 9, and where the bonding adhesive layer 13 is cured with the primer 9, portions where the optical fiber 14 has suffered a strain due to a deformation of the placement object 3 can be more sharply detected in the latter.

The reasons therefor are explained using, as an example, a case where the placement object 3 has a crack 3a as shown in (a) and (b) of Fig. 7. In Fig. 7, (a) and (b) illustrate cross-sections along the longitudinal direction of the optical fiber 14.

In the case shown in (a) of Fig. 7, in which the bonding adhesive layer 13 of the optical-fiber-embedding sheet 1 was bonded to the placement object 3 without application of the primer, the crack 3a of the placement object 3 is reflected in a strain $\varepsilon$ (elongation) of the optical fiber 14 over a range of a certain length $L_a$ where the position of the crack 3a is the center. In that range, the strain $\varepsilon$ per unit length has been reduced to a small value. Meanwhile, in the case shown in (b) of Fig. 7, in which the bonding adhesive layer 13 was cured with the primer, the optical fiber 14 has been tenaciously fixed to the placement object 3 and, hence, the crack 3a of the placement object 3 is reflected only in a strain $\varepsilon$ of the optical fiber 14 over a range of a small length $L_b$ near the crack. Those portions of the optical fiber 14 which lie outside that range suffer no strain since these portions have been tenaciously fixed to the placement object 3. Because of this, the strain $\varepsilon$ per unit length of the optical fiber 14 in the range of the length $L_b$ has a large value and can be sharply detected.

Thus, by curing the bonding adhesive layer 13, which contains the optical fiber 14 embedded therein, by a reaction with the primer 9, the optical fiber 14 is more highly integrated with the placement object 3, making it possible to sharply detect a deformation of the placement object 3. It is, however, noted that there is a possibility that deformations which are minute and not problematic might be detected as noises, measured values might exceed a measurable range, or the optical fiber 14 might be damaged, and there are cases where it is desirable to bond the bonding adhesive layer 13 to the placement object 3 without application of the primer 9. The bonding adhesive layer 13 bonded without the primer 9 is more apt to conform to surface irregularities of the placement object 3 and to deformations of the placement object 3.

Consequently, which method is to be employed may be decided in view of the purpose of measurement, the placement object 3, etc. Furthermore, the material, etc. of the bonding adhesive layer 13 may be selected so that the rigidity of the cured portion 131, in the case where the bonding adhesive layer 13 is cured with the primer 9, or the rigidity of the bonding adhesive layer 13 itself, in the case where the bonding adhesive layer 13 is cured without the primer 9, is an appropriate value according to the purpose of measurement, the placement object 3, etc.

The base material 11 also is not limited to the materials mentioned above, and may be a high-strength layer including a carbon-fiber sheet, an aramid sheet, or the like. Furthermore, a scale may be given to the base material 11 along the longitudinal direction so that how long the optical-fiber-embedding sheet 1 has been applied can be grasped.

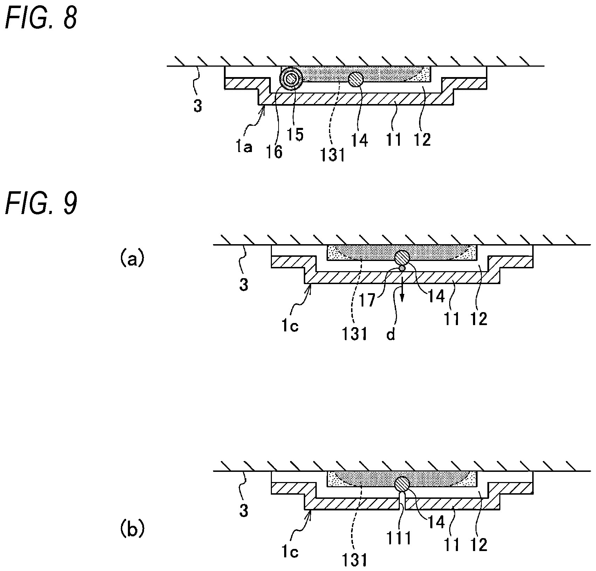

Moreover, the configuration of the optical-fiber-embedding sheet is also not limited to those described above. For example, as in an optical-fiber-embedding sheet 1a shown in Fig. 8, an optical fiber 15 for use as a sensor for temperature measurement may be further embedded in the bonding adhesive layer or the cured portion 131, besides the optical fiber 14. The optical fiber 15 is for determining a temperature distribution along a longitudinal direction thereof and is disposed in parallel with the optical fiber 14 along a longitudinal direction of the optical-fiber-embedding sheet 1a.

In the example shown in Fig. 8, a tube 16 is embedded in the bonding adhesive layer or the cured portion 131, and the optical fiber 15 for temperature measurement is inserted into the tube 16, so that an edge between the optical fiber 15 and the bonding adhesive layer or the cured portion 131 is cut. The optical fiber 15 has an outer diameter smaller than an inner diameter of the tube 16, and the optical fiber 15 is prevented from having a strain, for example, by disposing the optical fiber 15 slightly loosely. In this case, the results of an examination with the optical fiber 14 can be corrected with temperature using a longitudinal-direction temperature distribution of the optical fiber 15 determined with the optical fiber 15. Thus, any deformation of the placement object 3 can be detected more accurately.

Only the optical fiber 15, which is for temperature measurement, may be embedded in the bonding adhesive layer or the cured portion 131. This case also has an advantage that since any sheet or the like does not lie between the optical fiber 15 and the placement object 3, temperatures of portions near the placement object 3 are apt to be reflected in the results of an examination with the optical fiber 15.

Moreover, as in an optical-fiber-embedding sheet 1c shown in (a) of Fig. 9, a wire 17 for sheet tearing which extends along the longitudinal direction of the optical fiber 14 may be embedded in the vicinity of the optical fiber 14 in order to facilitate an operation of connecting the optical fiber 14 to a measuring instrument.

As the wire 17, steel or stainless-steel can, for example, be used. After the optical-fiber-embedding sheet 1c has been applied and, for example, before the bonding adhesive layer is completely cured with the primer 9, either an end of the wire 17 protruding from a longitudinal-direction end of the optical-fiber-embedding sheet 1c or an end of the wire 17 taken out of the optical-fiber-embedding sheet 1c by cutting, for example, the base material 11 is pulled outward from the optical-fiber-embedding sheet 1c as indicated by arrow d in (a) of Fig. 9, i.e., toward the base material 11. As a result, the optical-fiber-embedding sheet 1c is torn as shown in (b) of Fig. 9 to form a torn portion 111, so as to render the inside optical fiber 14 easy to take out, making the operation of connecting to a measuring instrument easy.

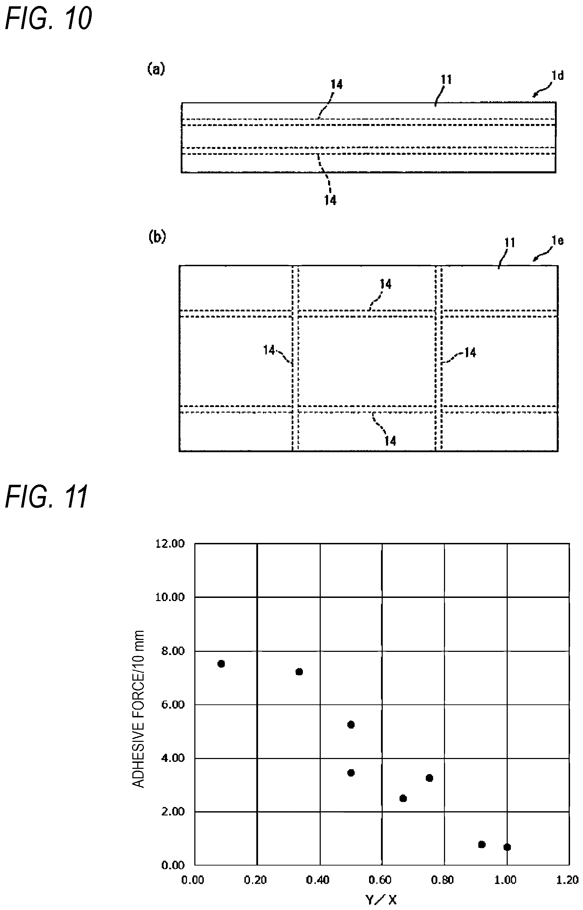

As described above, the number of optical fibers 14 is not limited to one. It is possible, as in an optical-fiber-embedding sheet 1d shown in (a) of Fig. 10, to dispose a plurality of (two in the example shown in the figure) optical fibers 14 in parallel with each other along a longitudinal direction of the optical-fiber-embedding sheet 1d. In this case, even when one optical fiber 14 breaks, the examination can be continued using the other optical fiber 14. Hence, a risk that a fiber breakage makes the examination impossible is reduced. In cases when, for example, an examination by BOCDA is conducted, it is possible to connect ends, on the same side, of two optical fibers 14 to each other with an optical connector (not shown) or the like to easily configure a round-trip circuit of the optical fibers 14 which is necessary for the examination.

The optical fibers 14 are not limited to ones disposed so as to extend in one direction only. As in an optical-fiber-embedding sheet 1e shown in (b) of Fig. 10, a plurality of optical fibers 14 may be incorporated so as to extend in different directions. In the example shown in (b) of Fig. 10, the optical fibers 14 have been disposed along two directions orthogonal to each other in a plane. This example is capable of simultaneously performing examinations for the two directions. In a construction field, it is difficult to accurately dispose optical fibers along a plurality of directions. However, if the optical-fiber-embedding sheet 1e into which the optical fibers 14 extending in a plurality of directions have been incorporated beforehand is used, it is possible to place the optical fibers 14 extending accurately in desired directions.

While preferred embodiments of the present invention have been described with reference to the accompanying drawings, the present invention is not limited to the embodiments. It is apparent that a person skilled in the art could conceive of various changes or modifications within the range of technical ideas disclosed herein, and these changes or modifications are considered to belong to the technical range of the present invention as a matter of course.

EXAMPLES

Hereinafter, the embodiments of the present invention will be described in more detail using Examples.

(Measurement of Adhesive Force)

Adhesive surfaces of an adhesive layer and a bonding adhesive layer of an optical-fiber-embedding sheet were placed on an SS400 plate having a thickness of 2.0 mm. After the bonding, a 2 kg roller was moved back and forth once for pressing. After 3 minutes from the bonding, a peel adhesive force (N) was measured at a peel angle of 180° and a peel rate of 300 mm/min using a tensile compression tester (device name "TG-1kN" manufactured by Minebea Co., Ltd.), and an adhesive force was calculated using the following equation:

$$\text{adhesive force (N/10 mm)} = \text{peel adhesive force (N)/width X (cm) of adhesive layer}$$

The calculated adhesive force was evaluated as follows:

A: adhesive force of 1.00 N/10 mm or more
B: adhesive force of 0.75 N/10 mm or more and less than 1.00 N/10 mm
C: adhesive force of less than 0.75 N/10 mm

The results are shown in Table 1 and Fig. 11.

(Measurement of Tape Feeding Force)

The adhesive surfaces of the adhesive layer and the bonding adhesive layer of the optical-fiber-embedding sheet were placed on a PVDF surface side of a resin film (KFC film, FT-50Y, manufactured by Kureha Extron Co., Ltd.) that has a PVDF surface and an acrylic resin surface. After the bonding, a 2 kg roller was moved back and forth once for pressing. After 24 hours from the pressing, a peel adhesive force (N) was measured at a peel angle of 180° and a peel rate of 300 mm/min using a tensile compression tester (device name "TG-1kN" manufactured by Minebea Co., Ltd.).

Tape feeding force (N/10 mm) = peel adhesive force (N)/width X (cm) of adhesive layer

The calculated tape feeding force was evaluated as follows:

A: tape feeding force of 4.00 N/10 mm or less
B: tape feeding force of 5.00 N/10 mm or less and more than 4.00 N/10 mm
C: tape feeding force of more than 5.00 N/10 mm

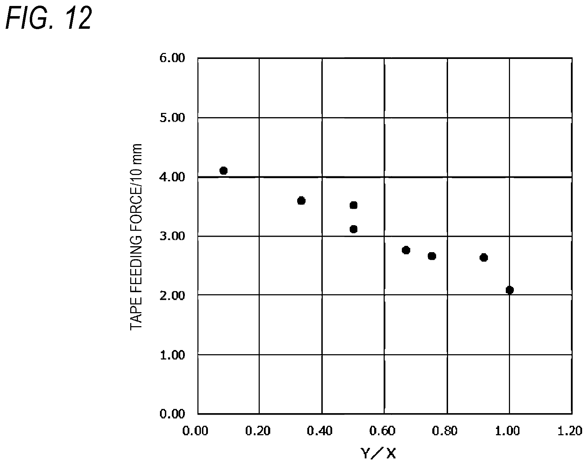

The results are shown in Table 2 and Fig. 12.

Example 1

(Bonding Adhesive Layer)

A bonding adhesive composition was prepared by mixing 20 mass% of a liquid multifunctional phenol novolac type epoxy resin (trade name "jER152", manufactured by Mitsubishi Chemical Corporation), 30 mass% of a solid bisphenol A epoxy resin (trade name "jER1256", manufactured by Mitsubishi Chemical Corporation), and 50 mass% of an acrylic rubber particle-dispersed bisphenol A epoxy resin (trade name "Acryset BPA 328", manufactured by Nippon Shokubai Co., Ltd., acrylic rubber particles: 20 mass%, average particle size: 200 nm to 300 nm), and methyl ethyl ketone was added and diluted such that an epoxy resin concentration was 60% to prepare a bonding adhesive composition.
The bonding adhesive composition was applied on a surface of a polyethylene terephthalate film (PET film) (trade name "DIAFOIL MRF#38", manufactured by Mitsubishi Chemical Corporation) that had subjected to a peeling treatment, and dried by heating at 80°C for 3 minutes such that a thickness after drying was 50 $\mu$m, to form a bonding adhesive layer. Thereafter, the bonding adhesive layer was brought into contact with another polyethylene terephthalate film such that the bonding adhesive layer was sandwiched between the two polyethylene terephthalate films to obtain a bonding adhesive sheet.

(Adhesive Layer)

As an adhesive, a double-sided adhesive tape (trade name "HyperJoint H9008", manufactured by Nitto Denko Corporation, thickness: 0.8 mm) was used.

(Base Material)

As a base material, a resin film (KFC film, FT-50Y, manufactured by Kureha Extron Co., Ltd., thickness: 50 $\mu$m) was used. The resin film has a PVDF surface and an acrylic resin surface.

(Optical Fiber)

As an optical fiber, one coated with an acrylic resin (outer diameter: $\Phi$ 500 $\mu$m) was used.

(Primer)

As a primer, an 80 mass% ethanol solution of 1,2-dimethylimidazole (manufactured by Shikoku Chemicals Corporation) was used.

(Preparation of Optical-Fiber-Embedding Sheet)

First, a double-sided adhesive tape was applied to an acrylic resin surface of a base material so as to have a width shown in Table 1 below, forming an adhesive layer. Subsequently, an optical fiber was laminated so as to be located at the center of the adhesive layer in a width direction. Then, a width of the bonding adhesive sheet prepared above was adjusted to have a width in Table 1 below, a PET film was peeled off, and the bonding adhesive sheet was applied to the adhesive layer so as to surround the optical fiber. After all the layers were laminated, a 2 kg roller was moved back and forth once for pressing, thereby obtaining an optical-fiber-embedding sheet of Example 1. The base material had the same width as the adhesive layer.

Examples 2 to 7 and Comparative Example 1

Optical-fiber-embedding sheets of Examples 2 to 7 and Comparative Example 1 were obtained in the same manner as in Example 1, except that a width X of an adhesive layer and a width Y of a bonding adhesive layer were changed as shown in Table 1.

[Table 1]

Table 1

| | | Example 1 | Example 2 | Example 3 | Example 4 | Example 5 | Example 6 | Example 7 | Comparative Example 1 |
|---|---|---|---|---|---|---|---|---|---|
| Width | X: width of adhesive layer (cm) | 2.00 | 2.00 | 3.00 | 3.00 | 3.00 | 3.00 | 3.00 | 2.00 |
| | Y: width of bonding adhesive layer (cm) | 1.00 | 1.50 | 1.00 | 1.50 | 2.00 | 2.75 | 0.25 | 2.00 |
| | Y/X | 0.50 | 0.75 | 0.33 | 0.50 | 0.67 | 0.92 | 0.08 | 1.00 |
| Adhesive force | (N/10 mm) | 5.25 | 3.26 | 7.25 | 3.47 | 2.49 | 0.79 | 7.55 | 0.69 |
| | Evaluation | A | A | A | A | A | B | A | C |
| Tape feeding force | (N/10 mm) | 3.12 | 2.66 | 3.61 | 3.54 | 2.77 | 2.65 | 4.11 | 2.10 |
| | Evaluation | A | A | A | A | A | A | B | A |

From the results in Table 1, it was found that the optical-fiber-embedding sheets of Examples each have an adhesive layer with a width larger than that of a bonding adhesive layer and have a high adhesive force, so that temporary fixation is sufficient until application to a placement object is completed. In addition, it was found that the optical-fiber-embedding sheets of Examples each have a low tape feeding force, so that workability is high, and excessive stress on an optical fiber can be prevented.

On the other hand, it was found that in the optical-fiber-embedding sheet of Comparative Example, a width of an adhesive layer is the same as that of a bonding adhesive layer, and thus an adhesive force is low, and temporary fixation until application to a placement object is completed is insufficient.

Although various embodiments have been described above with reference to the drawings, the present invention is not limited to these examples. It is apparent that a person skilled in the art could conceive of various changes or modifications within the scope described in the claims, and these changes or modifications are considered to belong to the technical range of the present invention as a matter of course. Constituent elements of the embodiments described above may be combined at will unless the combinations depart from the spirit of the invention.

This application is based on a Japanese patent application filed on April 26, 2022 (Application No. 2022-072653), the contents thereof being incorporated herein by reference.

REFERENCE SIGNS LIST

1, 1a, 1c, 1d, 1e: Optical-fiber-embedding sheet
3: Placement object
5, 5a: Application device
7: Covering material
9: Primer
11, 21, 31: Base material
12, 22, 32: Adhesive layer
13, 23, 33, 33a, 33b: Bonding adhesive layer
14, 24, 34, 34a, 34b: Optical fiber
16: Tube
17: Wire
51: Main body
52, 56: Fixing material
53: Press roller
54: Reel
55: Support material
57: Primer applicator
58: Auxiliary roller
111: Torn portion
131: Cured portion

**Claims**

1. An optical-fiber-embedding sheet which is a sheet into which an optical fiber for use as a sensor has been incorporated, comprising

   a base material, an adhesive layer, and a bonding adhesive layer laminated in this order,
   at least a part of the optical fiber having been embedded in the bonding adhesive layer, and
   the adhesive layer having a width larger than that of the bonding adhesive layer.

2. The optical-fiber-embedding sheet according to claim 1, wherein when a width (cm) of the adhesive layer is X, and a width (cm) of the bonding adhesive layer is Y, $0.05 \leq Y/X < 0.95$ is satisfied.

3. The optical-fiber-embedding sheet according to claim 1 or 2, including a wire for sheet tearing provided to the bonding adhesive layer.

4. A method for placing an optical fiber, including adhering the optical-fiber-embedding sheet according to claim 1 or 2 to a placement object by using the adhesive layer and the bonding adhesive layer, and then bonding the optical-fiber-embedding sheet to a placement object by using the bonding adhesive layer which is cured.

5. The method for placing an optical fiber according to claim 4, wherein a primer for curing the bonding adhesive layer by a chemical reaction with the bonding adhesive layer is applied to the placement object and thereafter the optical-fiber-embedding sheet is applied to a portion of the placement object to which the primer has been applied.

6. The method for placing an optical fiber according to claim 4, wherein a primer for curing the bonding adhesive layer by a chemical reaction with the bonding adhesive layer is applied to the bonding adhesive layer and thereafter the optical-fiber-embedding sheet is applied by bringing the bonding adhesive layer into contact with the placement object.

7. The method for placing an optical fiber according to claim 4, including

using an application device which includes a reel having the optical-fiber-embedding sheet wound thereon and a press roller and
applying the optical-fiber-embedding sheet by unwinding the optical-fiber-embedding sheet from the reel and moving the application device in a direction along which the optical-fiber-embedding sheet is applied, while pressing the unwound optical-fiber-embedding sheet against the placement object with the press roller.

8. An application device for applying the optical-fiber-embedding sheet according to claim 1 or 2 to a placement object, including

a reel having the optical-fiber-embedding sheet wound thereon and
a press roller for pressing the optical-fiber-embedding sheet unwound from the reel against the placement object.

*FIG. 1*

(a)

(b)

*FIG. 2*

(a)

(b)

FIG. 3

(a)

(b)

FIG. 4

(a)

(b)

FIG. 5

(a)

(b)

(c)

## FIG. 6

## FIG. 7

(a) CASE WHERE BONDING ADHESIVE LAYER
WAS BONDED WITHOUT PRIMER APPLICATION

(b) CASE WHERE BONDING ADHESIVE LAYER
WAS BONDED WITH PRIMER

*FIG. 8*

*FIG. 9*

(a)

(b)

## FIG. 10

(a)

(b)

## FIG. 11

FIG. 12

## INTERNATIONAL SEARCH REPORT

| International application No. |
|---|
| **PCT/JP2023/016362** |

### A. CLASSIFICATION OF SUBJECT MATTER

*G01D 5/353*(2006.01)i; *C09J 7/38*(2018.01)i; *G02B 6/00*(2006.01)i
FI:   G01D5/353 B; C09J7/38; G02B6/00 B

According to International Patent Classification (IPC) or to both national classification and IPC

### B. FIELDS SEARCHED

Minimum documentation searched (classification system followed by classification symbols)

G01D5/26-5/38; C09J7/00-7/50; G02B6/00-6/02; G02B6/24-6/255; G02B6/46-6/54; G01B11/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-328010 A (OKAYAMA CITY) 15 November 2002 (2002-11-15) <br> paragraphs [0005]-[0036], fig. 1-14 | 1-8 |
| Y | WO 2021/054350 A1 (NITTO DENKO CORPORATION) 25 March 2021 (2021-03-25) <br> paragraphs [0008], [0016]-[0024], fig. 4-6 | 1-8 |
| Y | JP 2018-172614 A (LINTEC CORP) 08 November 2018 (2018-11-08) <br> paragraph [0002] | 1-8 |
| Y | JP 2002-162545 A (HAKKOU INDUSTRIAL CORP) 07 June 2002 (2002-06-07) <br> paragraphs [0015]-[0024], fig. 1-4 | 1-8 |
| Y | JP 2021-148713 A (KAJIMA CORP) 27 September 2021 (2021-09-27) <br> paragraphs [0007]-[0062], fig. 1-10 | 3, 5-8 |
| A | JP 2003-98364 A (NITTO DENKO CORPORATION) 03 April 2003 (2003-04-03) <br> paragraphs [0030]-[0037], fig. 1 | 1-8 |
| A | JP 2003-20453 A (NITTO DENKO CORPORATION) 24 January 2003 (2003-01-24) <br> paragraphs [0030]-[0034], fig. 3 | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 June 2023** | **27 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2023/016362**

| Patent document cited in search report | | | Publication date (day/month/year) | Patent family member(s) | | | Publication date (day/month/year) |
|---|---|---|---|---|---|---|---|
| JP | 2002-328010 | A | 15 November 2002 | (Family: none) | | | |
| WO | 2021/054350 | A1 | 25 March 2021 | US | 2022/0349733 | A1 | |
| | | | | paragraphs [0013], [0090]-[0113], fig. 4-6 | | | |
| | | | | EP | 4033210 | A1 | |
| | | | | CN | 114424028 | A | |
| | | | | KR | 10-2022-0061986 | A | |
| | | | | TW | 202118998 | A | |
| JP | 2018-172614 | A | 08 November 2018 | (Family: none) | | | |
| JP | 2002-162545 | A | 07 June 2002 | (Family: none) | | | |
| JP | 2021-148713 | A | 27 September 2021 | EP | 4130650 | A1 | |
| | | | | paragraphs [0009]-[0093], fig. 1-10 | | | |
| | | | | TW | 202144832 | A | |
| | | | | CN | 115298512 | A | |
| | | | | WO | 2021/193472 | A1 | |
| JP | 2003-98364 | A | 03 April 2003 | (Family: none) | | | |
| JP | 2003-20453 | A | 24 January 2003 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002131025 A
- JP 2002048516 A
- JP 2021148713 A
- WO 2022072653 A

**Non-patent literature cited in the description**

- **MCLAREN** ; **SONS**. *C.A.Dahlquist, 'Adhesion: Fundamentals and Practice*, 1966, 143